(19) Europäisches Patentamt
European Patent Office
Office européen des brevets

(11) EP 1 219 696 A1

(12) **EUROPÄISCHE PATENTANMELDUNG**

(43) Veröffentlichungstag:
**03.07.2002 Patentblatt 2002/27**

(51) Int Cl.[7]: **C09J 175/04**, C08G 18/44, C08G 18/10

(21) Anmeldenummer: **00128756.4**

(22) Anmeldetag: **30.12.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Sika AG, vorm. Kaspar Winkler & Co.**
**CH-8048 Zürich (CH)**

(72) Erfinder:
- **Bosshard, Bernhard**
  **8953 Dietikon (CH)**
- **Schlumpf, Michael**
  **8143 Stallikon (CH)**

(74) Vertreter: **Blum, Rudolf Emil Ernst**
**c/o E. Blum & Co**
**Patentanwälte**
**Vorderberg 11**
**8044 Zürich (CH)**

(54) **Härtende Klebstoffe auf Basis eines Füllstoff enthaltendem, aus Diisocyanaten und Polycarbonat-Polyolen hergestellen Prepolymers**

(57) Es wird ein Füllstoff enthaltender Klebstoff beschrieben, der auch bei Anwesenheit grosser Mengen an leitfähigen Füllstoffen, wie schwach oder nicht oxidiertem Russ, gute Antennenimpedanz und Durchgangswiderstände zeigt. Dieser Klebstoff zeichnet sich durch die Anwesenheit von Polycarbonat-Prepolymeren aus, insbesondere Prepolymeren, die eine Gruppierung der Formel I enthalten:

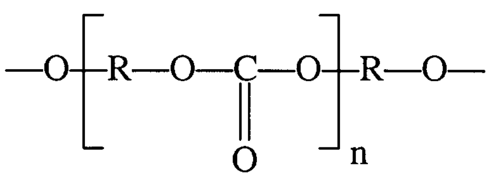

(I)

worin R einen geradkettigen oder verzweigtkettigen, gesättigten oder ungesättigten aliphatischen, gesättigten oder ungesättigten cycloaliphatischen, araliphatischen, oder aromatischen Rest mit 3 bis 10 Kohlenstoffatomen bedeutet und

n = 1 bis 8, vorzugsweise 2 bis 5 ist.

EP 1 219 696 A1

## Beschreibung

Die vorliegende Erfindung betrifft neue Polyurethan-(PUR)-Klebstoffe, welche sich durch gute Antennenwerte (Antennenimpedanz) und Durchgangswiderstände in Kombination mit hohen mechanischen Eigenschaften und herabgesetzter Blasenbildungstendenz bestens für die Direktverglasung von Automobilscheiben mit integrierten Antennen eignen.

Die Anforderungen an einen Klebstoff für die Direktverglasung im Fahrzeubau werden stets erweitert, sodass der Klebstoff mehrere Funktionen erfüllen muss. Eine wichtige zusätzliche Eigenschaft besteht darin, dass der Klebstoff für die Montage von Fahrzeugscheiben mit integrierter Antenne die Qualität des Radioempfanges nicht beeinträchtigen soll, eine weitere, dass durch den Klebstoff Kontaktkorrosion verhindert werden soll.

Heutzutage wird ein antennentauglicher, d.h. mit guter Antennenimpedanz, und niederleitender Klebstoff nur durch eine massive Reduktion des leitenden Füllstoffes (z.B. Russ) erreicht. Dies hat jedoch zur Folge, dass die optimale Einstellung der rheologischen Eigenschaften, insbesondere der Standfestigkeit, sowie die Erzielung von hohen mechanischen Eigenschaften begrenzt ist, da sowohl die rheologischen als auch die mechanischen Eigenschaften von Art und Menge der Füllstoffe abhängen.

Das der Erfindung zugrundeliegende Impedanzproblem kann wie folgt beschrieben werden:

Antennenscheiben bestehen aus Leiterstrukturen, die sich in oder auf der Scheibe befinden. Diese Antennenleiter werden an den Rand der Scheibe geführt, um dort an das abgehende Kabel angeschlossen zu werden. Diese Anschlüsse und Sammelschienen an den Scheiberändern können zufällig oder gewollt mit dem Scheibenklebstoff in Berührung kommen, bzw. vollständig damit bedeckt werden. Durch den Klebstoff wird eine zusätzliche Impedanz zur Masse gebildet, die sich als Blind- und Wirkanteil bemerkbar macht. Dies hat eine schwächere Empfangsleistung zur Folge. Andererseits begünstigt dies auch Schwingungsübertragungen von der Karosserie auf die Antenne, was ein Rauschen zur Folge hat.

Beschreibung der Impedanz:

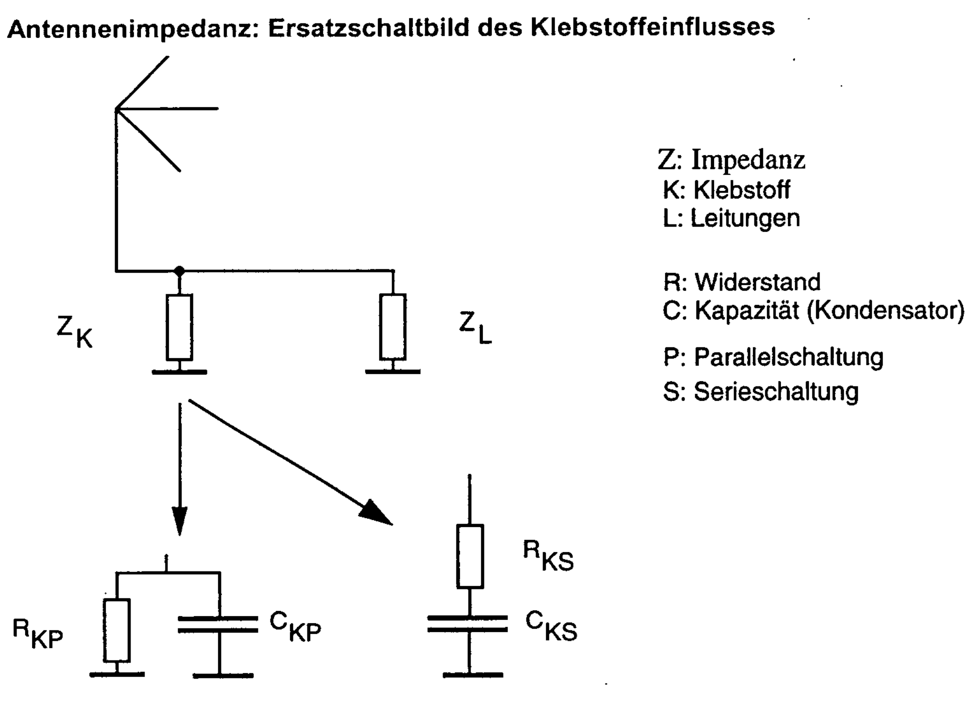


Die obenstehende Skizze beschreibt die grundsätzliche Situation. ($R_{KS}$ steht für: Widerstand (R) verursacht durch den Klebstoff, Modell Serienschaltung).

Die Antenne wird mit der durch den Klebstoff verursachten Impedanz $Z_K$ und der Systemeigenimpedanz (Leitungen) $Z_L$ belastet. Durch die durch den Klebstoff entstehende zusätzliche Impedanz $Z_K$ sinkt die zur Verfügung stehende Signalspannung. Dies hat eine schlechtere Empfangsleistung zur Folge.

Für die Impedanz sind zwei Ersatzschaltbilder möglich, welche beide verwendet werden. Die Parallelschaltung mit den Grössen $R_{KP}$ und $C_{KP}$, bzw. die Serienschaltung mit den Grössen $R_{KS}$ und $C_{KS}$.

Diese Modelle können ineinander umgerechnet werden.

Die Impedanz kann somit durch einen Widerstand (R) und eine Kapazität (C) beschrieben werden. Widerstand und Kapazität sind frequenzabhängig.

Zwischen diesen Grössen bestehen folgende Beziehungen:

$$R_{KS} = \frac{R_{KP}}{1+\omega^2 C_{KP}^2 R_{KP}^2} \text{ und } C_{KS} = \frac{1+\omega^2 C_{KP}^2 R_{KP}^2}{\omega^2 C_{KP} R_{KP}^2}$$

wobei ω die Kreisfrequenz (= 2π * Frequenz) darstellt.

Die beiden Grössen ($R_{KP}$ und $C_{KP}$) oder von diesen Grössen abgeleiteten Grössen werden nun in der Automobilindustrie berechnet und als Richtwerte für Scheibenklebstoffe festgelegt.

Ziel der vorliegenden Erfindung war es deshalb, Klebstoffe bereitzustellen, welche ohne Reduktion der leitenden Füllstoffe gute Antennenimpedanz und Niederleitfähigkeit in Kombination mit hohen mechanischen Eigenschaften gewährleisten und sich somit bestens für das Verkleben unedler Metalle und für Direktverglasungen eignen.

Ein Gegenstand der vorliegenden Erfindung ist deshalb ein mindestens einen Füllstoff enthaltender Klebstoff, der ein Prepolymer enthält, das aus einem Polycarbonat-Prepolymer besteht, das einen Polycarbonatpolyol-Rest mit einem mittleren Equivalenzgewicht (Molekulargewicht pro OH-Gruppe im Polyol) von etwa 100 bis etwa 1000, insbesondere etwa 250 bis etwa 750, speziell bevorzugt etwa 250 bis etwa 500 aufweist, oder aus einer Prepolymermischung, die ein entsprechendes Polycarbonat-Prepolymer enthält.

Die erfindungsgemässen Klebstoffe können einkomponentig oder zweikomponentig sein. Sie enthalten im Prepolymer vorzugsweise einen Anteil mindestens eines Polycarbonatdiol-Rests der folgenden Formel I:

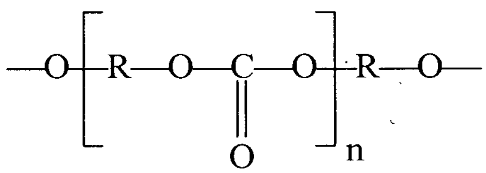

(I)

worin R einen geradkettigen oder verzweigtkettigen, gesättigten oder ungesättigten aliphatischen, gesättigten oder ungesättigten cycloaliphatischen, araliphatischen oder aromatischen Rest mit 3 bis 10 Kohlenstoffatomen bedeutet, und

n = 1 bis 8, vorzugsweise 2 bis 5 ist.

Bevorzugte Polycarbonatdiole, aus denen entsprechende Prepolymere hervorgehen, enthalten folglich 1 bis 8, vorzugsweise 2 bis 5 Polycarbonatgruppen und sie wurden erhalten aus geradkettigen oder verzweigtkettigen, gesättigten oder ungesättigten aliphatischen, gesättigten oder ungesättigten cycloaliphatischen, araliphatischen, oder aromatischen Diolen mit 3 bis 10 Kohlenstoffatomen, wobei gesättigte aliphatische Diole bevorzugt sind.

Daneben ist auch die Verwendung kleiner Polyether für die Herstellung von Polycarbonat-Polyolen möglich, aber nicht bevorzugt.

Bei der Verwendung von Polycarbonaten aus kurzkettigen aliphatischen Diolen, insbesondere Diolen mit 3 bis 6 Kohlenstoffatomen, ist es bevorzugt, dass diese verzweigtkettig sind. Ferner sind Polycarbonatdiole mit mittleren Molekulargewichten von ca. 500 bis ca. 1500, insbesondere ca. 500 bis ca. 1000 bevorzugt, obschon auch längerkettige Polycarbonatdiole zu einer wenn auch schlechteren Verbesserung der gesamtheitlichen Eigenschaften führen.

Wesentlich ist für gute Verbesserung der Impedanz ferner, dass die Prepolymeren ins Netzwerk eingebaut werden und nicht in einer inaktiven Form, z.B. auskristallisiert, vorliegen. Speziell bevorzugte Polymere aus Polycarbonaten sind deshalb Prepolymere mit den oben angegebenen Eigenschaften.

Das Prepolymer im Einkomponentensystem ist reaktiv mit Wasser (Luftfeuchtigkeit) und trägt als Endgruppe, z.B. Isocyanatgruppen, Silangruppen etc. Dieses Prepolymer kann neben dem Polycarbonatpolyol-Rest, der vorzugsweise Polycarbonatdiol-Reste enthält oder daraus besteht, weitere Polyol-Reste enthalten. Vorzugsweise, insbesondere für einkomponentige Systeme, stammen diese Polyol-Reste aus Polyetherpolyolen, üblicherweise mit einer Funktionalität zwischen 1.5 und 3 und einem Molekulargewicht zwischen 400 und 20'000. Solche weiteren Polyole sind üblicherweise vorhanden in Mengen von 5 bis 85 Gew.-%, insbesondere in Mengen von 10 bis 75 Gew.-%, bezogen auf die Gesamtmenge des Klebstoffs.

Speziell bevorzugt ist es, wenn die Polycarbonatdiol-Reste und die anderen Polyol-Reste im Prepolymer in

verschiedenen Molekülen vorliegen, also nicht als Misch-Molekül, das sowohl Polycarbonat- als auch z.B. Polyetherketten enthält.

Der Anteil der Polycarbonatpolyol-Reste (beziehungsweise Polycarbonatpolyol) beträgt 0.1 bis 45 Gew.-%, vorzugsweise 1 bis 30 Gew.-%, speziell bevorzugt 2 bis 25 Gew.-% bezogen auf die Gesamtmenge an Klebstoff. Das für die Herstellung des Prepolymers verwendete Polycarbonatpolyol kann in flüssiger oder in fester Form vorliegen und wird bevorzugt durch Umesterung einer niedermolekularen, Carbonatgruppen enthaltenden Verbindung, wie z.B. Diethylcarbonat, Propylencarbonat etc., mit einem kurzkettigen Diol, wie z.B. 1,4-Butandiol, 1,6-Hexandiol etc., hergestellt.

Die Herstellung von Isocyanatgruppen enthaltenden PUR-Prepolymeren ist bekannt. Sie wird üblicherweise bei Temperaturen zwischen 25°C und 100°C und gegebenenfalls in Gegenwart eines Katalysators, z.B. Dibutylzinndilaurat, meistens in etwa stöchiometrisch, d.h. pro H-aktive Gruppe bevorzugt 1.5 bis 2.1 Isocyanatgruppen in Form von 2 oder mehr Isocyanatgruppen enthaltendem Monomer, durchgeführt.

Die Herstellung von mit Silangruppen therminierten Prepolymeren kann analog erfolgen oder durch nachträgliche Reaktion eines Isocyanatgruppen enthaltenden Prepolymers mit einem Aminosilan oder Mercaptosilan.

Die in den Klebstoffsystemen enthaltenen Füllstoffe sind vorzugsweise strukturgebende Füllstoffe, insbesondere leitende strukturgebende Füllstoffe. Die Füllstoffe liegen üblicherweise in Gesamtmengen von 10 bis 80 Gew.-%, vorzugsweise in Gesamtmengen von 20 bis 50 Gew.-% und speziell bevorzugt in Gesamtmengen von 30 bis 40 Gew.-% vor, wobei von den Gesamtfüllstoffen üblicherweise mindestens 3 Gew.-%, vorzugsweise mindestens 10 Gew.-% leitende Füllstoffe sind (alle Angaben bezogen auf das Gewicht des Klebstoffes). Es ist selbstverständlich möglich, dass alle Füllstoffe leitende Füllstoffe sind, die in den oben als Gesamtmengen angegebenen Mengenbereichen vorliegen.

Beispiele für strukturgebende Füllstoffe sind Kreiden, Kaoline, Silikate und insbesondere Russ. Thixotropierende Füllstoffe sind Aerosil und Soccal-Kreiden.

Russ ist ein bevorzugter Füllstoff, da er relativ billig ist und sehr gute verstärkende Eigenschaften aufweist. Ferner zeichnet sich Russ mit geringem oxidiertem Anteil durch ein hohes $CO_2$-Adsorptionsvermögen aus, was insbesondere für ein blasenfreies Aushärten von isocyanatterminierten Prepolymeren mit Wasser resp. Luftfeuchtigkeit wesentlich ist. Es ist deshalb ein grosser Vorteil der erfindungsgemässen Klebstoffe, dass sie grosse Mengen leitenden Russes enthalten können.

Die erfindungsgemässen Klebstoffe auf Basis von Polycarbonat-Prepolymeren können auch als Zweikomponenten(2K)-Systeme vorliegen, insbesondere mit Diamin, Diol und/oder Wasser in der Härterkomponente.

Insbesondere bei der Härtung mit Wasser ist bei einem russhaltigen 2K-System die $CO_2$-Adsorption wieder ein wesentlicher positiver Zusatzeffekt.

Ein 2K-Klebstoff mit einer Harzkomponente enthaltend Polycarbonatdiol und einer Härterkomponente aus Polyiisocyanat, insbesondere Diisocyanat, ist auch möglich und führt zu guten Resultaten. In Gegenwart weiterer Diole in der Harzkomponente können unerwünschte Kettenverlängerungs-Reaktionen mit z.B. Polyetherpolyol auftreten, die zu einem Produkt mit schlechterer Impedanz führen.

Die Klebstoffsysteme der vorliegenden Erfindung können aus dem erfindungsgemässen Prepolymer und einem Füllstoff bestehen oder sie können gegebenenfalls zusätzlich ein weiteres Prepolymer bzw. übliche Additive und Hilfstoffe enthalten, beispielsweise Weichmacher, Katalysatoren, latente Härter, Haftungsverbesserer, Farbstoffe, Pigmente, UV-Absorptionsmittel, Stabilisatoren, Antioxidantien, oberflächenaktive Additive, Flammhemmer, fungistatisch aktive Substanzen etc. Die Art und Menge dieser Zusatzstoffe richtet sich nach dem Verwendungszweck der erfindungsgemässen Massen. Bei der Herstellung der erfindungsgemässen Massen ist dafür zu sorgen, dass möglichst wenig Feuchtigkeit eingebracht wird. Alle verwendeten Komponenten sollten möglichst frei von Wasser sein.

Der erfindungsgemässe Klebstoff bewirkt neben guter Antennenimpedanz und hohen Durchgangswiderständen auch höhere mechanische Eigenschaftswerte, insbesondere der Module, sowie eine verhältnismässig kleine Blasenbildungstendenz. Eine plausible Erklärung liegt darin, dass der Polycarbonatpolyol-Rest Wasserstoffbrückenbindungen ausbildet und somit die mechanischen Eigenschaften erhöht.

Die erfindungsgemässen Massen können je nach Anforderung für das Verbinden, Abdichten oder Beschichten verwendet werden und finden im Fahrzeugbau in der Endmontage, insbesondere für die Direktverglasung von Scheiben mit integrierter Antennen Einsatz. Da die erfindungsgemässen Klebstoffe auch hohe Versteifung bewirken, sind sie auch wichtige Bausteine für die Leichtbauweise im Fahrzeugbau, und sie können für die Verklebung verschiedener metallischer Substrate und für das strukturelle Kleben statisch belasteter Teile eingesetzt werden.

Im folgenden sollen einige Beispiele aufgezeigt werden, die die Erfindung weiter veranschaulichen sollen und den Umfang der Erfindung aber in keiner Weise beschränken.

Beispiele:

| **Rohmaterialien, die in den Beispielen verwendet wurden:** | **Bezogen von:** |
|---|---|
| | |
| MDI-Prepolymer basierend auf Polypropylentriol, (MG ≈ ca. 4500 g/mol, NCO-Gehalt ≈ 2.3%) | Sika, CH |
| Weichmacher (Diisodecylphthalat) | BASF Schweiz AG |
| Russ | Degussa, DE |
| Kaolin | Cell Chemie AG |
| Thixotropiermittel (organisch) | Sika, CH |
| Sn-Katalysator (Dibutylzinndilaurat) | MG Chemag AG |
| Hydrophobe Kieselsäure | Degussa, DE |

MDI = Methylendiphenyldiisocyanat
=> Die Füllstoffe wurden bei 130°C, während 48 Stunden getrocknet.

**Herstellung von Prepolymer auf NCO-Basis**

Polyol und Weichmacher vorlegen und auf 80°C aufheizen. Isocyanat (NCO/OH-Verhältnis = 2) zugeben und unter Stickstoffatmosphäre mischen bis sich der NCO-Gehalt um weniger als 0.05% innerhalb einer halben Stunde verändert. Zur NCO- Bestimmung wird die Probe mit einer Dibutylamin-Lösung versetzt und mit Salzsäure zurück titriert.

**Herstellung der Klebstoffe**

In der Tabelle 1 sind Zusammensetzung und Eigenschaften von Klebstoffen (formuliert mit dem erfindungsgemäss spezifizierten Prepolymer = PC-Prep.) im Vergleich zur Referenz aufgeführt. Die Herstellung erfolgte auf die Weise, dass alle Komponenten in einem Vakuummischer zu einer knollenfreien Klebstoff-Paste kompoundiert wurden. Der Klebstoff wurde nach herkömmlicher Art in Kartuschen abgefüllt.

Tabelle 1:

| **Angaben in Gewichtsprozent** | | | | |
|---|---|---|---|---|
| **Formulierung** | **Referenz** | **1** | **2** | **3** |
| | | | | |
| **DIDP** | 11 | 11 | 11 | 11 |
| **MDI-Prep.** | **40** | **38** | **35** | **30** |
| **Russ** | 15 | 15 | 15 | 15 |
| Kaolin | 20 | 20 | 20 | 20 |
| **Kieselsäure** | 2 | 2 | 2 | 2 |
| **Thixo** | 10 | 10 | 10 | 10 |
| **PC-Prep.** | **0** | **2** | **5** | **10** |
| **Katalysator** | 2 | 2 | 2 | 2 |

DIDP = Weichmacher
Thixo = Thixotropiermittel
PC-Prep. = Polycarbonat-Prepolymer mit folgender Spezifikation:
Polycarbonatdiol: 500 g/mol, basierend auf Dimethylcarbonat und 1,6-Hexandiol, (ca. 50 Gew.-% des PC-Prep.)
MDI: 250 g/mol (ca. 50 Gew.-% des PC-Prep.)

| Resultate | | | | | | | | | |
|---|---|---|---|---|---|---|---|---|---|
| **Klebstoff** | **Durchgangs- widerstand [Ω · cm]** | **εr'** | | | | **εr"** | | | |
| | | **1 MHz** | **6 MHz** | **100 MHz** | **500 MHz** | **1 MHz** | **6 MHz** | **100 MHz** | **500 MHz** |
| **Referenz** | $3 \cdot 10^7$ | 46.9 | 28.1 | 14.8 | 11.8 | 40.6 | 15.4 | 5.1 | 3.0 |
| **1** | $3 \cdot 10^8$ | 17.8 | 14.6 | 10.6 | 9.4 | 3.9 | 2.6 | 1.8 | 1.2 |
| **2** | $1 \cdot 10^9$ | 14.7 | 12.9 | 10.0 | 9.1 | 1.7 | 1.56 | 1.38 | 0.94 |
| **3** | $3 \cdot 10^9$ | 15.8 | 13.7 | 10.5 | 9.6 | 2.26 | 1.83 | 1.48 1.02 | |

wobei gilt: Dielektrizitätskonstante εr = εr' - j·εr"

| **Klebstoff** | **Dehnung [%]** | **Zugfestig- keit [MPa]** | **E- Module [MPa]** | | | |
|---|---|---|---|---|---|---|
| | | | **0.5- 5%** | **0.5- 25%** | **25- 50%** | **75- 100%** |
| **Referenz** | 453 | 7.8 | 5.1 | 4.0 | 3.0 | 2.5 |
| **1** | 505 | 9.6 | 7.4 | 5.1 | 3.6 | 2.7 |
| **2** | 454 | 8.9 | 11.4 | 7.1 | 4.4 | 2.9 |
| **3** | 447 | 10.2 | 23.4 | 10.9 | 5.2 | 2.7 |

**Patentansprüche**

1. Füllstoff enthaltender Klebstoff, **dadurch gekennzeichnet, dass** er ein Prepolymer enthält, das aus einem Polycarbonat-Prepolymer besteht, das einen Polycarbonatpolyol-Rest mit einem mittleren Equivalenzgewicht von 100 bis 1000, insbesondere 250 bis 750, speziell bevorzugt 250 bis 500 aufweist, oder aus einer Prepolymermischung, die ein entsprechendes Polycarbonat-Prepolymer enthält.

2. Füllstoff enthaltender Klebstoff gemäss Anspruch 1, **dadurch gekennzeichnet, dass** er einkomponentig ist.

3. Füllstoff enthaltender Klebstoff gemäss Anspruch 1, **dadurch gekennzeichnet, dass** er zweikomponentig ist.

4. Füllstoff enthaltender Klebstoff gemäss einem der vorangehenden Ansprüche, **dadurch gekennzeichnet, dass** der Polycarbonatpolyol-Rest ein Polycarbonatdiol-Rest ist.

5. Füllstoff enthaltender Klebstoff gemäss Anspruch 4, **dadurch gekennzeichnet, dass** der Polycarbonatdiol-Rest die folgende Formel I aufweist:

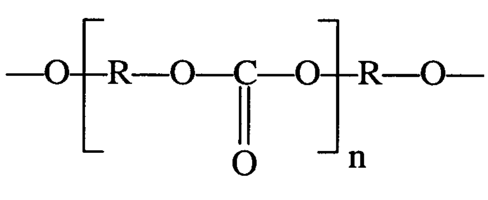

(I)

worin R einen geradkettigen oder verzweigtkettigen, gesättigten oder ungesättigten aliphatischen, gesättigten oder ungesättigten cycloaliphatischen, araliphatischen, oder aromatischen Rest mit 3 bis 10 Kohlenstoffatomen bedeutet und

n = 1 bis 8, vorzugsweise 2 bis 5 ist.

6. Füllstoff enthaltender Klebstoff gemäss Anspruch 5, **dadurch gekennzeichnet, dass** der Polycarbonatdiol-Rest ein mittleres Molekulargewicht von 500 bis 1500, insbesondere 500 bis 1000 aufweist.

7. Füllstoff enthaltender Klebstoff gemäss einem der vorangehenden Ansprüche, **dadurch gekennzeichnet, dass** das Prepolymer als Endgruppen Isocyanatgruppen und/oder Silangruppen trägt.

8. Füllstoff enthaltender Klebstoff gemäss einem der vorangehenden Ansprüchen, **dadurch gekennzeichnet, dass** er Polycarbonat-Prepolymer in einer Menge von 0,1 bis 75 Gew.-%, insbesondere 1 bis 25 Gew.-%, und einen oder mehrere Füllstoffe in einer Menge von 10 bis 80 Gew.-%, insbesondere 20 bis 50 Gew.-%, speziell bevorzugt 30 bis 40 Gew.-%, je bezogen auf das Gewicht des Klebstoffes, enthält.

9. Füllstoff enthaltender Kebstoff gemäss einem der vorangehenden Ansprüche, **dadurch gekennzeichnet, dass** er mindestens einen Füllstoff enthält oder daraus besteht, der strukturgebende Eigenschaften besitzt, insbesondere ein leitender verstärkender Füllstoff, speziell bevorzugt nicht oder schwach oxidierter Russ.

10. Füllstoff enthaltender Klebstoff gemäss Anspruch 9, **dadurch gekennzeichnet, dass** der mindestens eine leitende Füllstoff in Mengen von 3 bis 80 Gew.-%, vorzugsweise 10 bis 50 Gew.-% und speziell bevorzugt in Mengen von 20 bis 40 Gew.-%, jeweils bezogen auf das Gewicht des Klebstoffes vorliegt.

11. Füllstoff enthaltender Klebstoff gemäss einem der vorangehenden Ansprüche, **dadurch gekennzeichnet, dass** er eine Prepolymer-Mischung enthält, die neben dem Polycarbonat-Prepolymer Prepolymere aus Nicht-Polycarbonat-Polyol enthält, insbesondere aus Polyetherpolyolen.

12. Füllstoff enthaltender Klebstoff gemäss Anspruch 11, **dadurch gekennzeichnet, dass** das Nicht-Polycarbonat-Polyol eine Funktionalität zwischen 1.5 und 3 und ein mittleres Molekulargewicht zwischen 400 und 20'000 aufweist.

13. Füllstoff enthaltender Klebstoff gemäss Anspruch 12, **dadurch gekennzeichnet, dass** das Nicht-Polycarbonat-Polyol in Mengen von 5 bis 85 Gew.-%, vorzugsweise 10 bis 75 Gew.-%, jeweils bezogen auf das Gewicht des Klebstoffs, vorhanden ist.

14. Herstellung eines mindestens einen Füllstoff enthaltenden Klebstoffs gemäss einem der Ansprüche 1 bis 13, **dadurch gekennzeichnet, dass** ein einen Polycarbonatpolyol-Rest enthaltendes Polycarbonat-Prepolymer oder eine Prepolymermischung, die ein solches Polycarbonat-Prepolymer enthält, mit mindestens einem Füllstoff unter wasserfreien Bedingungen vermischt wird.

15. Verfahren gemäss Anspruch 14, **dadurch gekennzeichnet, dass** eine Prepolymeremischung eingesetzt wird, die Prepolymere mit Polyetherpolyol-Rest, insbesondere Polyetherdiol-Rest, enthält.

16. Verwendung eines Füllstoff enthaltenden Klebstoffs gemäss einem der Ansprüche 1 bis 13 im Bereich von Antennen.

17. Verwendung eines Polycarbonat-Prepolymers wie in einem der Ansprüche 1 bis 13 beschrieben in einem antennentauglichen Klebstoff.

Europäisches Patentamt

# EUROPÄISCHER RECHERCHENBERICHT

Nummer der Anmeldung
EP 00 12 8756

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 533 275 A (ENICHEM SINTESI)<br>24. März 1993 (1993-03-24)<br>* Seite 3, Zeile 37 - Seite 4, Zeile 7 *<br>* Ansprüche 13-15 *<br>--- | 1-17 | C09J175/04<br>C08G18/44<br>C08G18/10 |
| A | US 5 061 749 A (ITO MASAHIRO ET AL)<br>29. Oktober 1991 (1991-10-29)<br>* Spalte 3, Zeile 45 - Spalte 3, Zeile 54<br>*<br>* Spalte 4, Zeile 33 - Spalte 4, Zeile 49<br>*<br>* Ansprüche 1,6 *<br>--- | 1-17 | |
| A | EP 0 210 859 A (MINNESOTA MINING & MFG)<br>4. Februar 1987 (1987-02-04)<br>* Spalte 2, Zeile 8 - Spalte 2, Zeile 38 *<br>* Ansprüche 1,4 *<br>--- | 1-17 | |
| A | DATABASE WPI<br>Section Ch, Week 199346<br>Derwent Publications Ltd., London, GB;<br>Class A25, AN 1993-364973<br>XP002168358<br>& JP 05 270870 A (SEKISUI CHEM IND CO LTD)<br>, 19. Oktober 1993 (1993-10-19)<br>* Zusammenfassung *<br>--- | 1-17 | RECHERCHIERTE SACHGEBIETE (Int.Cl.7)<br>C09J<br>C08G |
| A | DATABASE WPI<br>Section Ch, Week 199011<br>Derwent Publications Ltd., London, GB;<br>Class A23, AN 1990-079280<br>XP002168359<br>& JP 02 032185 A (KURARAY CO LTD),<br>1. Februar 1990 (1990-02-01)<br>* Zusammenfassung *<br>----- | 1-17 | |

Der vorliegende Recherchenbericht wurde für alle Patentansprüche erstellt

| Recherchenort | Abschlußdatum der Recherche | Prüfer |
|---|---|---|
| MÜNCHEN | 28. Mai 2001 | Heidenhain, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 00 12 8756

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-05-2001

| Im Recherchenbericht angeführtes Patentdokument | Datum der Veröffentlichung | Mitglied(er) der Patentfamilie | Datum der Veröffentlichung |
|---|---|---|---|
| EP 0533275 A | 24-03-1993 | IT 1251489 B | 15-05-1995 |
| | | AT 174940 T | 15-01-1999 |
| | | DE 69227969 D | 04-02-1999 |
| | | DE 69227969 T | 20-05-1999 |
| | | JP 5239202 A | 17-09-1993 |
| | | US 5288839 A | 22-02-1994 |
| US 5061749 A | 29-10-1991 | JP 2774825 B | 09-07-1998 |
| | | JP 3062879 A | 18-03-1991 |
| | | DE 4023804 A | 31-01-1991 |
| EP 0210859 A | 04-02-1987 | US 4740424 A | 26-04-1988 |
| | | ES 2001865 A | 01-07-1988 |
| | | JP 62054718 A | 10-03-1987 |
| | | KR 9411159 B | 24-11-1994 |
| JP 5270870 A | 19-10-1993 | KEINE | |
| JP 2032185 A | 01-02-1990 | KEINE | |

EPO FORM P0461

Für nähere Einzelheiten zu diesem Anhang : siehe Amtsblatt des Europäischen Patentamts, Nr.12/82